# EUROPÄISCHE PATENTSCHRIFT

(11) **EP 3 660 370 B1**
(45) Veröffentlichungstag und Bekanntmachung des Hinweises auf die Patenterteilung: **22.01.2025**
(21) Anmeldenummer: 19202623.5
(22) Anmeldetag: 11.10.2019
(51) Int. Cl.: F16K 31/122, F16K 37/00

(54) **KOMPONENTE FÜR EIN ABSPERRORGAN**
COMPONENT FOR A SHUT-OFF ELEMENT
COMPOSANT POUR UN ORGANE D'ARRÊT

(30) Priorität: 30.11.2018 DE 102018130579
(43) Veröffentlichungstag der Anmeldung: 03.06.2020
(73) Patentinhaber: GEMÜ Gebr. Müller Apparatebau GmbH & Co. Kommanditgesellschaft, 74653 Ingelfingen (DE)
(72) Erfinder: Höfs, Daniel, 74653 Künzelsau (DE)
(74) Vertreter: DREISS Patentanwälte PartG mbB

(56) Entgegenhaltungen:
- EP-A1- 0 739 503
- EP-A1- 2 375 085
- EP-A1- 2 843 281
- EP-B1- 0 739 503
- DE-B3- 102012 003 230
- US-A1- 2006 169 334
- US-A1- 2013 000 753

## Beschreibung

Die Erfindung betrifft ein Absperrorgan zur Begrenzung eines Stroms eines Prozessfluids, eine Komponente für ein Absperrorgan, eine Steuereinheit für ein Absperrorgan und ein Verfahren zum Betreiben eines Absperrorgans.

Aus dem Stand der Technik ist es bekannt, dass eine Antriebseinheit eines Absperrorgans bei einem Erreichen einer Stromschwelle des Antriebsstroms abgeschaltet wird, um so beispielsweise ein Auffahren eines Absperrkörpers auf einen Ventilsitz zu erkennen.

Die Druckschriften EP2843281, EP0739503, US2006169334, DE102012003230, EP2375085, US2013000753 offenbaren unterschiedliche Ausbildungen von Prozessventilen.

Aufgabe der Erfindung ist es daher, den bekannten Stand der Technik zu verbessern.

Die der Erfindung zugrundeliegende Aufgabe wird durch eine Komponente für ein Absperrorgan gemäß dem Anspruch 1 gelöst.

Gemäß einem ersten Aspekt dieser Beschreibung wird ein Absperrorgan zur Begrenzung eines Stroms eines Prozessfluids bereitgestellt. Das Absperrorgan umfasst: Eine Antriebseinheit; einen Absperrkörper, dessen veränderbare Position einen für das Prozessfluid wirksamen Strömungsdurchmesser des Absperrorgans bestimmt; ein zwischen der Antriebseinheit und dem Absperrkörper angeordnetes Antriebselement, welches eine von der Antriebseinheit ausgehende Antriebskraft wenigstens anteilig in den Absperrkörper einbringt, wobei ein elastischer Zwischenabschnitt des Antriebselements eine Änderung eines Abstands zwischen einem absperrkörperseitigen starren Abschnitt des Antriebselements und einem antriebsseitigen starren Abschnitt des Antriebselements zulässt; und eine Sensoreinheit, welche dazu eingerichtet ist, wenigstens ein Signal zu ermitteln, welches den Abstand zwischen dem absperrkörperseitigen starren Abschnitt des Antriebselements und dem antriebsseitigen starren Abschnitt des Antriebselements indiziert.

Diese Rückmeldung bietet Vorteile beim Betreiben des Absperrorgans. So ist mittels des wenigstens einen Signals eine Kraftänderung ermittelbar und eine Steuereinheit entscheidet in Abhängigkeit von der Kraftänderung, wie die Antriebseinheit zu betreiben ist.

Die ermittelbare Kraft wird zum einen von der Kraft ausgehend von der Antriebseinheit und zum anderen von dem auf den Absperrkörper wirkenden Druck des Prozessfluids bestimmt. Eine Verkleinerung des Abstandes zwischen den beiden starren Abschnitten indiziert beispielsweise eine steigende Antriebskraft ausgehend von der Antriebseinheit, bei gleichzeitigem Auffahren auf einen Ventilsitz.

Bewirkt die Antriebseinheit beispielsweise ein Zusammendrücken des Zwischenabschnitts, so wird dies mittels des wenigstens einen Signals ermittelt und eine Regelung des Abstandes bzw. der Kraft kann das Zusammendrücken ausgleichen.

Ein weiterer Vorteil liegt darin, dass über den Abstand der Druck des Prozessmediums ermittelbar ist. Folglich ist eine Überwachung des Drucks des Prozessmediums mittels des Absperrorgans möglich. Weitere Messstellen für den Druck des Prozessmediums können dadurch entfallen.

Des Weiteren bietet das bereitgestellte Absperrorgan eine Sicherheitsfunktion. Ein Auftreten eines Druckstoßes innerhalb des Prozessfluids, welcher beispielsweise bei einem auf einen Ventilsitz drückenden Absperrorgan wirkt, bewirkt, dass das Absperrorgan kurz aufgeht und nach der Druckspitze wieder zugeht. Diese Sicherheitsfunktion steht vorteilhaft auch bei einem stromlosen Antrieb zur Verfügung.

Darüber hinausgehend kann über die Rückmeldung mittels des wenigstens einen Signals beim Auftreten eines Druckstoßes mittels der Antriebseinheit gegengeregelt werden, so dass eine Öffnung bzw. ein Schließen des Absperrorgans bzw. Ventils minimiert wird. So wirkt das Absperrorgan, dessen Antriebseinheit in Abhängigkeit von dem ermittelten Druckstoß gegenregelt, für die Seite des Ventils, aus der der Durchfluss kommt, druckstabilisierend. Folglich wirkt das Absperrorgan stabilisierend auf andere Anlagenteile.

Aber auch ohne aktives Gegenregeln ist es mittels des wenigstens einen Signals möglich, Gegenmaßnahmen einzuleiten bzw. Warnungen auszugeben. Tritt ein Druckstoß auf, kann dieser in Abhängigkeit von dem wenigstens einen Signal an weitere Absperrorgane oder an eine zentrale Verwaltungseinheit gesendet werden. So kann Überwachungspersonal umgehend Gegenmaßnahmen einleiten und/oder das weitere Absperrorgan wird geöffnet, um die Anlage vor einer Zerstörung zu schützen. Auch können Antriebe unterschiedlicher Absperrorgane direkt miteinander kommunizieren. Dies führt zu einer zusätzlichen Redundanz im Falle eines detektierten Ereignisses.

Des Weiteren ermöglicht die Ermittlung des Abstandes eine erweiterte Überwachung. So kann eine Steuereinheit die üblichen Betriebsbedingungen lernen oder es findet eine entsprechende Bedatung mit Soll-Betriebsbedingungen statt. Bei einer festgestellten Abweichung von diesen Betriebsbedingungen wird ein Alarm ausgegeben.

Ein weiterer Vorteil betrifft den Absperrkörper. Durch die nun möglichen Stell- und Regelmöglichkeiten kann der Absperrkörper geschont werden. Insbesondere die Ableitung der auf den Sitz wirkenden Kraft aus dem wenigstens einen Signal ermöglicht ein den Absperrkörper schonendes Betreiben der Antriebseinheit. Hieraus leiten sich weitere Vorteile ab, was die Wahl des Materials des Absperrkörpers betrifft. So können andere Materialien als bisher verwendete für die Herstellung des Absperrkörpers in Betracht kommen.

Ein vorteilhaftes Beispiel zeichnet sich dadurch aus, dass wenigstens ein zum Absperrorgan feststehendes Lagerelement zur Lagerung des Antriebselements eine wenigstens anteilige Einleitung einer von dem Absperrkörper ausgehenden Kraft in den elastischen Zwischenabschnitt zulässt. Vorteilhaft ermöglicht das wenigstens eine Lagerelement, dass eine vom Absperrkörper herrührende Kraft in das Zwischenelement einleitbar ist, um die Messung des Abstandes durchzuführen.

Ein vorteilhaftes Beispiel zeichnet sich dadurch aus, dass der Zwischenabschnitt wenigstens zwei Unterabschnitte umfasst, welche voneinander unterschiedliche Federkonstanten aufweisen. Vorteilhaft werden durch die unterschiedlichen Federkonstanten Messbereich bereitgestellt, die eine unterschiedlich hohe Auflösung des Messsignals aufweisen. Folglich wird wenigstens ein Messbereich bereitgestellt, der eine höhere Auflösung der Messpunkte aufweist als ein anderer Messbereich.

Ein vorteilhaftes Beispiel zeichnet sich dadurch aus, dass die Sensoreinheit dazu eingerichtet ist, ein erstes Signal zu ermitteln, welches eine erste Position des absperrkörperseitigen starren Abschnitts indiziert, und ein zweites Signal zu ermitteln, welches eine zweite Position des antriebsseitigen starren Abschnitts indiziert. Durch die Ermittlung der ersten und zweiten Position kann auf den Abstand geschlossen werden. Des Weiteren bietet die separate Information der jeweiligen Position die Möglichkeit, den Zustand des Absperrorgans genauer zu erfassen. So ist es beispielsweise möglich, einen Bereich für eine Schließposition des Absperrkörpers von anderen Bereichen zu unterscheiden. Gleichzeitig indizieren die beiden Signale einen Abstand zwischen den beiden starren Abschnitten des Antriebselements.

Ein vorteilhaftes Beispiel zeichnet sich dadurch aus, dass die Sensoreinheit umfasst: wenigstens ein entlang der Bewegungsbahn des absperrkörperseitigen starren Abschnitts und/oder zur Bewegungsbahn des antriebsseitigen starren Abschnitts verlaufendes und zum Absperrorgan feststehendes Sensorelement, wenigstens ein mit dem wenigstens ein zum Absperrorgan feststehenden Sensorelement zusammenwirkendes zum absperrkörperseitigen starren Abschnitt feststehendes Sensorelement für die Ermittlung des ersten Signals, und wenigstens ein mit dem wenigstens ein zum Absperrorgan feststehenden Sensorelement zusammenwirkendes zum antriebsseitigen starren Abschnitt feststehendes Sensorelement für die Ermittlung des zweiten Signals.

Ein vorteilhaftes Beispiel zeichnet sich dadurch aus, dass die Sensoreinheit dazu eingerichtet ist, ein erstes Signal zu ermitteln, welches eine erste Position des absperrkörperseitigen starren Abschnitts indiziert, und ein zweites Signal zu ermitteln, welches den Abstand zwischen dem absperrkörperseitigen starren Abschnitt des Antriebselements und dem antriebsseitigen starren Abschnitt des Antriebselements indiziert. Durch die Ermittlung der ersten Position wird eine Position des Absperrkörpers bereitgestellt. Der gemessene Abstand schafft die Möglichkeit, die Kraft auf den Zwischenabschnitt auszuwerten.

Ein vorteilhaftes Beispiel zeichnet sich dadurch aus, dass die Sensoreinheit umfasst: wenigstens ein zum Absperrorgan feststehendes und entlang der Bewegungsbahn des absperrkörperseitigen starren Abschnitts verlaufendes Sensorelement, wenigstens ein zum absperrkörperseitigen starren Abschnitt feststehendes und mit dem wenigstens einen zum Absperrkörper feststehenden Sensorabschnitt zusammenwirkendes Sensorelement, wenigstens ein zum antriebsseitigen Abschnitt feststehenden und entlang der Bewegungsbahn des absperrkörperseitigen starren Abschnitts und entlang der Bewegungsbahn des antriebsseitigen starren Abschnitts verlaufendes Sensorelement, und wenigstens ein zum absperrkörperseitigen starren Abschnitt feststehendes und mit dem wenigstens einen zum antriebsseitigen Abschnitt feststehenden Sensorelement zusammenwirkendes Sensorelement. Dieses Beispiel ermöglicht die direkte Messung des Abstandes zwischen den beiden starren Abschnitten. Dies reduziert die auf die Messung des Abstandes wirkenden Toleranzen und ermöglicht so eine genauere Messung des Abstandes.

Ein vorteilhaftes Beispiel zeichnet sich dadurch aus, dass ein zum antriebsseitigen starren Abschnitt feststehendes Sensorelement der Sensoreinheit und ein zum absperrkörperseitigen starren Abschnitt feststehendes Sensorelement der Sensoreinheit mit einem zum Absperrorgan feststehenden Sensorelement der Sensoreinheit zusammenwirken.

Vorteilhaft muss so nur ein zum Absperrorgan feststehendes Sensorelement vorgesehen werden, was eine kompaktere Ausführung der Sensoreinheit ermöglicht.

Ein vorteilhaftes Beispiel zeichnet sich dadurch aus, dass Sensorelemente der Sensoreinheit zur Ermittlung des wenigstens einen Signals das gleiche Messprinzip verwenden. Vorteilhaft bewirkt die Verwendung des gleichen Messprinzips über die Sensorelemente der Sensoreinheit hinweg eine Aufwandsreduktion bei der Auswertung der jeweiligen Sensorsignale. Insbesondere kann die Auswerteelektronik vereinfacht werden. Beispielsweise können gleich aufgebaute Teile in zwei Auswerteeinheiten verwendet werden. In einem anderen Beispiel findet eine abwechselnde Messung von Werten zweier Sensorelemente mittels einer einzigen Auswertungseinheit statt, welche mittels eines Schalters die Werte der Sensorelemente abwechselnd abfragt. Insgesamt wird somit die Komplexität der Sensoreinheit reduziert.

Ein weiterer Aspekt dieser Beschreibung betrifft eine Komponente für ein Absperrorgan und zur Begrenzung eines Stroms eines Prozessfluids, wobei die Komponente umfasst: Ein Antriebselement, welches eine von der Antriebseinheit ausgehende Antriebskraft wenigstens anteilig in den Absperrkörper einbringt, wobei ein elastischer Zwischenabschnitt des Antriebselements eine Änderung eines Abstands zwischen einem absperrkörperseitigen starren Abschnitt des Antriebselements und einem antriebsseitigen starren Abschnitt des Antriebselements zulässt; und eine Sensoreinheit, welche dazu eingerichtet ist, wenigstens ein Signal zu ermitteln, welches die Position des absperrkörperseitigen starren Abschnitts des Antriebselements und/oder den Abstand zwischen dem absperrkörperseitigen starren Abschnitt des Antriebselements und dem antriebsseitigen starren Abschnitt des Antriebselements indiziert.

Vorteilhaft wird mit dieser Komponente eine Nachrüstmöglichkeit für bestehende Absperrorgane geschaffen. Insbesondere bestehende Antriebseinheiten mit einem Wegmesssystem können durch die Messung der Position des absperrkörperseitigen starren Abschnitts nachgerüstet werden.

Vorteilhaft können durch die Messung des Abstandes zwischen den zwei starren Abschnitten des Antriebselements auch Antriebseinheiten ohne integriertes Wegmesssystem nachgerüstet werden.

Ein vorteilhaftes Beispiel zeichnet sich dadurch aus, dass ein zum Absperrorgan feststehendes Lagerelement zur Lagerung des Antriebselements eine wenigstens anteilige Einleitung einer von dem absperrkörperseitigen starren Abschnitt ausgehenden Kraft in den Zwischenabschnitt zulässt.

Ein weiterer Aspekt dieser Beschreibung betrifft eine Steuereinheit für ein Absperrorgan, wobei die Steuereinheit mindestens einen Prozessor und mindestens einen Speicher mit Computerprogrammcode umfasst, wobei der Computerprogrammcode so konfiguriert ist, dass er mit dem mindestens einen Prozessor und dem mindestens einen Speicher bewirkt, dass die Steuereinheit ein Signal, welches den Abstand zwischen einem absperrkörperseitigen starren Abschnitt eines Antriebselements und einem antriebsseitigen starren Abschnitt des Antriebselements indiziert, empfängt; eine Soll-Position für eine Antriebseinheit des Absperrorgans in Abhängigkeit von dem wenigstens einem Signal ermittelt; und die Antriebseinheit in Abhängigkeit von der ermittelten Soll-Position betreibt.

Ein vorteilhaftes Beispiel zeichnet sich dadurch aus, dass die Steuereinheit einen Ist-Wert einer Kraft, welche auf einen zwischen den starren Abschnitten des Antriebselements angeordneten elastischen Zwischenabschnitt des Antriebselements wirkt, in Abhängigkeit von dem wenigstens einen Signal und in Abhängigkeit von wenigstens einem Parameter oder einer Kennlinie des elastischen Zwischenabschnitts ermittelt.

Über den Abstand ist der Druck des Prozessmediums in Form des Ist-Werts der Kraft ermittelbar. Folglich ist eine Überwachung des Drucks des Prozessmediums mittels des Absperrorgans möglich. Weitere Messstellen für den Druck des Prozessmediums können dadurch entfallen.

Ein vorteilhaftes Beispiel zeichnet sich dadurch aus, dass die Steuereinheit einen Soll-Wert für eine Kraft, welche auf den elastischen Zwischenabschnitt des Antriebselements wirken soll, mit dem Ist-Wert vergleicht, und die Soll-Position in Abhängigkeit von dem Vergleich ermittelt.

Ein weiter Aspekt dieser Beschreibung betrifft ein Verfahren zum Betreiben eines Absperrorgans, wobei das Verfahren umfasst: Empfangen eines Signals, welches den Abstand zwischen einem absperrkörperseitigen starren Abschnitt eines Antriebselements und einem antriebsseitigen starren Abschnitt des Antriebselements indiziert; Ermitteln einer Soll-Position für eine Antriebseinheit des Absperrorgans in Abhängigkeit von dem wenigstens einem Signal; und Betreiben der Antriebseinheit in Abhängigkeit von der ermittelten Soll-Position.

Weitere Merkmale und Vorteile der Erfindung finden sich in der nachfolgenden Beschreibung von Ausführungsbeispielen, wobei für die Merkmale auch bei unterschiedlichen Ausführungsformen die gleichen Bezugszeichen verwendet werden. In der Zeichnung zeigen:
- Figuren 1: in schematischer Form ein Absperrorgan;
- Figur 2: in schematischer Form eine Komponente eines Absperrorgans;
- Figuren 3, 4, 5, 6, 9: jeweils in schematischer Form ein Absperrorgan;
- Figuren 7, 8, 10 und 11: jeweils in schematischer Form eine Sensoreinheit;
- Figur 12: ein schematisches Blockdiagramm;
- Figur 13: ein schematisches Abstand-Kraft-Diagramm;
- Figur 14: in schematischer Form einen Zwischenabschnitt eines Antriebselements;
- Figur 15: in schematischer Darstellung eine Steuereinheit;
- Figur 16: in schematischer Darstellung ein Kommunikationsnetzwerk.

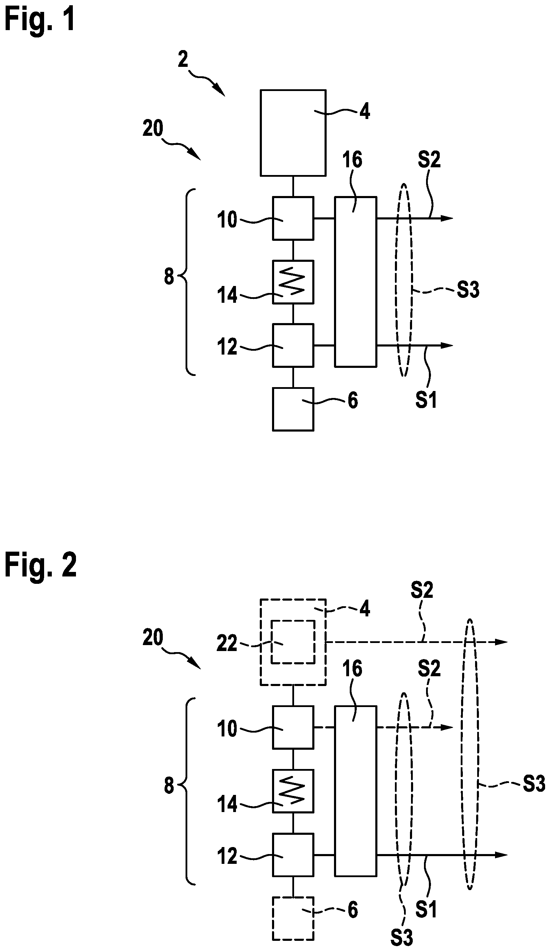

Figur 1 zeigt in schematischer Form ein Absperrorgan 2, welches zur Begrenzung eines Stroms eines Prozessfluids ausgebildet ist. Zwischen einer Antriebseinheit 4 und einem Absperrkörper 6 ist ein Antriebselement 8 angeordnet. Eine durch die Antriebseinheit 4 vorgegebene Antriebsstellung wird über das Antriebselement 8 an den Absperrkörper 6 weitergegeben. Das Absperrorgan 2 umfasst beispielsweise ein Ventil, eine Absperrklappe, einen Absperrhahn.

Das Antriebselement 8 umfasst einen antriebsseitigen starren Abschnitt 10, einen absperrkörperseitigen starren Abschnitt 12 und einen zwischen den starren Abschnitten 10 und 12 angeordneten elastischen Zwischenabschnitt 14. Der elastische Zwischenabschnitt 14 erlaubt eine veränderliche Beabstandung der starren Abschnitte 10 und 12 zueinander. Der Abstand zwischen den starren Abschnitten 10 und 12 ist entlang eines Kraftpfades zwischen der Antriebseinheit 4 und dem Absperrkörper 6 durch eine Stauchung oder Dehnung des Zwischenabschnitts 14 veränderbar. Der antriebsseitige starre Abschnitt 10 ist beweglich und in einem Beispiel starr mit einer beweglichen Welle der Antriebseinheit 4 verbunden. Der absperrkörperseitigen Abschnitt 12 ist starr mit dem Absperrkörper verbunden.

Die Antriebseinheit 4 umfasst beispielsweise einen Elektromotor, dessen angetriebene Trapezgewindespindel auf den starren Abschnitt 10 wirkt bzw. dessen Trapezgewindespindel den starren Abschnitt 10 repräsentiert. In einem anderen Beispiel umfasst die Antriebseinheit 4 einen pneumatischen Antrieb in Form eines innerhalb eines Zylinders gelagerten Antriebskolben.

Eine Sensoreinheit 16 ist dazu ausgebildet, den Abstand zwischen den starren Abschnitten 10 und 12 zu ermitteln. Der ermittelte Abstand entspricht der Auslenkung des elastischen Zwischenabschnitts 14. Mithilfe einer bekannten Federkonstante des Zwischenabschnitts 14 wird durch einfache Multiplikation der Federkonstante und der Auslenkung des elastischen Zwischenabschnitts eine auf den elastischen Zwischenabschnitt 14 wirkende Kraft ermittelt.

Eine Komponente 20 des Absperrorgans 2 umfasst wenigstens das Antriebselement 8 und die Sensoreinheit 16.

In einem Beispiel ermittelt die Sensoreinheit 16 ein Signal S1, welches die Position des starren Abschnitts 12 indiziert bzw. wiedergibt. Des Weiteren ermittelt die Sensoreinheit 16 ein Signal S2, welches die Position des starren Abschnitts 10 wiedergibt. Alternativ oder zusätzlich ermittelt die Sensoreinheit 16 ein Signal S3, welches den Abstand zwischen den beiden starren Abschnitten 10 und 12 indiziert bzw. eine auf den Zwischenabschnitt 14 wirkende Kraft indiziert.

Figur 2 zeigt in schematischer Form eine Komponente 20 für ein Absperrorgan, wie es beispielsweise in der Figur 1 gezeigt ist. Die gestrichelten Linien geben beispielsweise die aus Figur 1 bekannten Merkmale wieder und/oder sind optional. Die Komponente 20 umfasst das Antriebselement 8 und die Sensoreinheit 16.

In einem ersten Beispiel ermittelt die Sensoreinheit 16 das Signal S1 und damit die Position des absperrkörperseitigen starren Abschnitts 12. Eine Antriebseinheit 4 umfasst in diesem Beispiel ein eigenes Sensorelement 22 zur Ermittlung des Signals S2 und damit zur Ermittlung der Position des starren Abschnitts 10. Mithilfe der Signale S1 und S2 kann auf einen Abstand gemäß dem Signal S3 geschlossen werden.

In einem weitergehenden Beispiel ermittelt die Sensoreinheit 16 das Signal S2 und damit die Position des antriebsseitigen starren Abschnitts 10. Alternativ oder zusätzlich ermittelt die Sensoreinheit 16 das Signal S3, welches den Abstand zwischen den starren Abschnitten 10 und 12 oder eine auf den Zwischenabschnitt 14 wirkende Kraft repräsentiert.

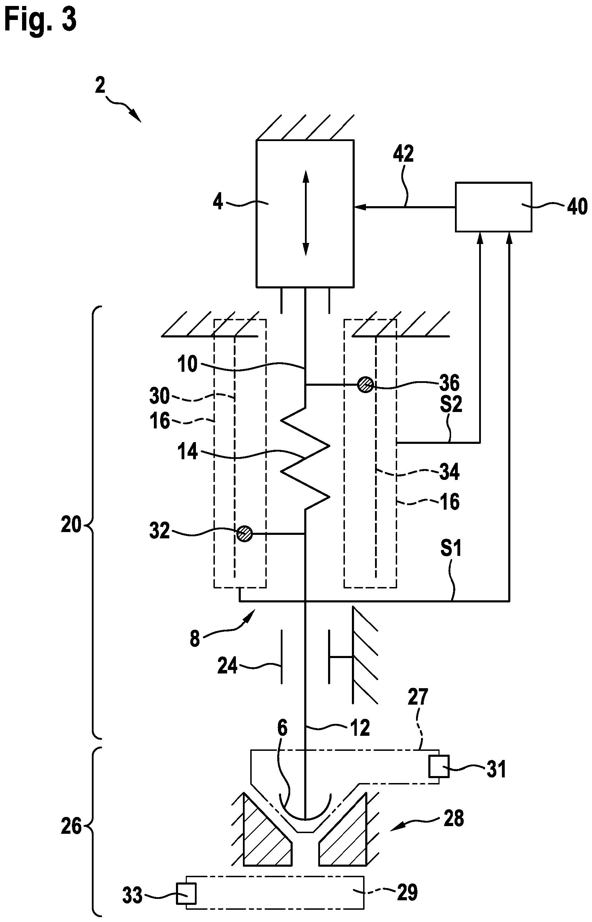

Figur 3 zeigt in schematischer Form ein Beispiel des Absperrorgans 2. Der Antrieb 4 erzeugt eine lineare Bewegung des antriebsseitigen starren Abschnitts 10 des Antriebselements 8. Der starre Abschnitt 10 leitet die Kraft wenigstens teilweise über den elastischen Zwischenabschnitt 14 und den starren Abschnitt 12 in den Absperrkörper 6 ein. Ein Lagerelement 24 ist feststehend zu dem Absperrorgan 2 angeordnet und ist ein Linearlager, welches eine Bewegung des starren Abschnitts 12 des Antriebselements 8 erlaubt. Das Lagerelement 24 ermöglicht somit ein leichtes lineares Gleiten des starren Abschnitts 12 gegenüber dem Absperrorgan 2. Eine vom Absperrkörper 6 ausgehende Kraft wird mittels des Lagerelements 24 zum großen Teil in den starren Abschnitt 12 und damit in den elastischen Zwischenabschnitt 14 eingeleitet.

Ein Ventilkörper 26 umfasst einen schematisch dargestellten Ventilsitz 28, auf den der Absperrkörper 6 drückt, um das Absperrorgan 2 zu verschließen. Der Ventilsitz 28 trennt bei einem auf den Ventilsitz gedrückten Absperrkörper 6 zwei mit Prozessfluid füllbare Kammern 27 und 29 voneinander. Ein Anschluss 31 des Ventilkörpers 26 führt in die Kammer 27. Ein Anschluss 33 führt in die Kammer 29. Bei einem geöffnetem Absperrorgan 2 ist der Absperrkörper 6 von dem Ventilsitz 28 entfernt und gibt einen wirksamen Strömungsdurchmesser für zwischen den Anschlüssen 31 und 33 fließendes Prozessfluid frei. Der Absperrkörper 6 begrenzt somit den wirksamen Strömungsdurchmesser für das Prozessfluid. Selbstverständlich sind auch andere Ausführungsformen des Ventilkörpers 26 und des Absperrkörpers 6 denkbar. Beispielsweise schließt das Absperrorgan 2 bei einer Bewegung des Absperrkörpers 6 in Richtung der Antriebseinheit 2. In einem weiteren Beispiel umfasst der Ventilkörper 26 wenigstens drei Anschlüsse und wenigstens zwei Ventilsitze, welche entgegengesetzt zueinander orientiert sind.

Die Sensoreinheit 16 ist vorliegend zweiteilig aufgebaut. Ein zum Absperrorgan 2 feststehend angeordnetes Sensorelement 30 wirkt mit einem zum absperrkörperseitigen starren Abschnitt 12 feststehenden Sensorelement 32 zusammen. Ein weiteres zum Absperrkörper 2 feststehend angeordnetes Sensorelement 34 wirkt mit einem zum antriebsseitigen starren Abschnitt 10 feststehend angeordneten Sensorelement 36 zusammen. Das Signal S1 repräsentiert die Position des Sensorelements 32 und damit die Position des absperrkörperseitigen starren Abschnitts 12. Das Signal S2 repräsentiert die Position des Sensorelements 36 und damit die Position des antriebsseitigen starren Abschnitts 10.

Eine Steuereinheit 40 ermittelt in Abhängigkeit von den empfangenen Signalen S1 und S2 eine Soll-Position 42 und betreibt mittels der Soll-Position 42 als Stellgröße die Antriebseinheit 4. Die Antriebseinheit 4 leitet in Abhängigkeit von der empfangenen Soll-Position 42 eine Kraft in den starren Abschnitt 10 ein. Alternativ zu der Soll-Position 42 kann auch ein Soll-Antriebsmoment an die Antriebseinheit 4 übermittelt werden.

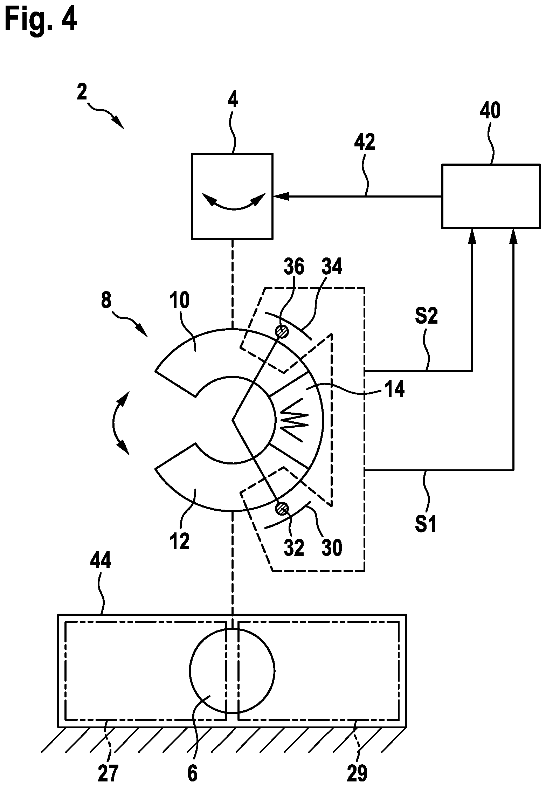

Figur 4 zeigt in schematischer Form ein Beispiel für das Absperrorgan 2. Im Gegensatz zu dem Sitzventil aus der Figur 3 ist in Figur 4 eine Absperrklappe gezeigt. Innerhalb eines das Prozessfluid führenden Fluidkanals 44 ist der Absperrkörper 6 in Form einer Klappe drehbar angeordnet und trennt in einer Schließposition die zwei Kammern 27 und 29 voneinander. Das Antriebselement 8 wird vorliegend nicht linear sondern rotatorisch bewegt. Der elastische Zwischenabschnitt 14 erlaubt die Veränderung eines Abstandes zwischen den starren Abschnitten 10 und 12 entlang einer Kreisbahn.

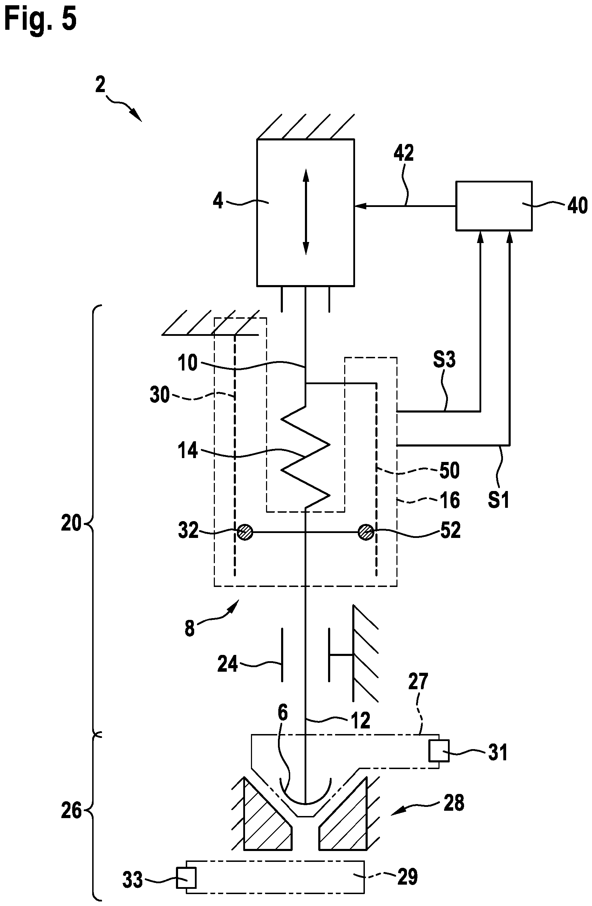

Figur 5 zeigt in schematischer Form ein Beispiel für das Absperrorgan 2. Im Unterschied zu Figur 3 ist eine andere Ausbildung der Sensoreinheit 16 gezeigt. Trotz unterschiedlicher Darstellung entspricht der Ventilkörper 26 der beschriebenen Ausbildung zu Figur 3. Das Signal S1 repräsentiert die Position des Sensorelements 32 in Bezug zu dem Sensorelement 30 und damit die Position des absperrkörperseitigen starren Abschnitts 12.

Im Unterschied zu Figur 3 ist die Sensoreinheit 16 mit einem Sensorelement 50 ausgestattet, welches feststehend zu dem antriebsseitigen starren Element 10 angeordnet ist. Ein weiteres Sensorelement 52 ist feststehend zu dem absperrkörperseitigen starren Element 12 angeordnet und wirkt mit dem Sensorelement 50 zusammen. Das Signal S3 repräsentiert damit die Position des Sensorelements 52 zu dem Sensorelement 50 und damit den Abstand zwischen den starren Abschnitten 10 und 12.

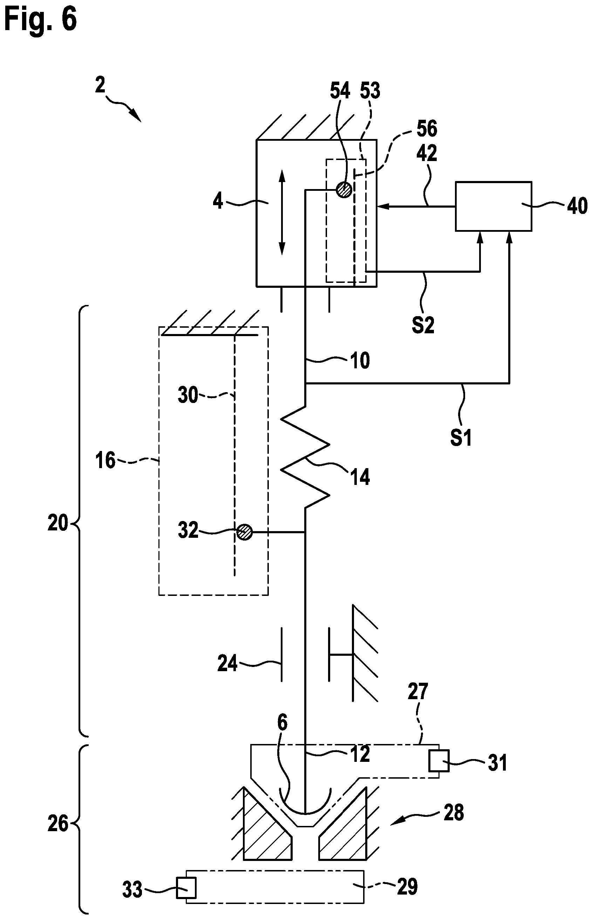

Figur 6 zeigt in schematischer Form ein Beispiel für das Absperrorgan 2. Im Unterschied zu Figur 3 ist eine andere Ausbildung der Sensoreinheit 16 gezeigt. Trotz unterschiedlicher Darstellung entspricht der Ventilkörper 26 der beschriebenen Ausbildung zu Figur 3.

Das Signal S1 repräsentiert die Position des Sensorelements 32 in Bezug zu dem Sensorelement 30 und damit die Position des absperrkörperseitigen starren Abschnitts 12. Das Signal S2 repräsentiert die Position eines Sensorelements 54 einer Sensoreinheit 53 in Bezug zu einem zu der Antriebseinheit 4 feststehend angeordneten Sensorelement 56 der Sensoreinheit 53 und damit die Position des antriebsseitigen starren Abschnitts 10. Die Komponente 20 stellt damit das Signal S1 bereit, welches zur Ermittlung des Abstandes zwischen den starren Abschnitten 10 und 12 genutzt wird.

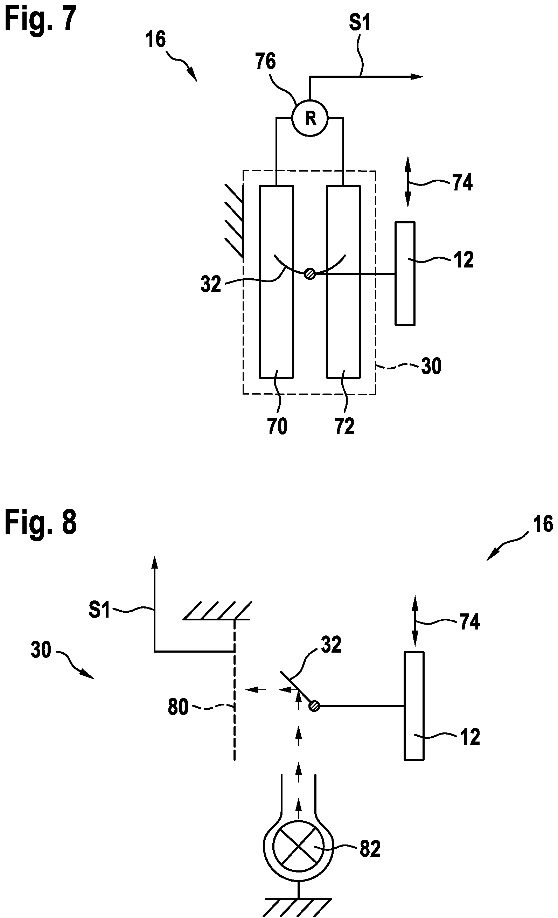

Figur 7 zeigt in schematischer Form ein Beispiel für einen Teil der Sensoreinheit 16. Beispielhaft sind die Sensorelemente 30 und 32 angeführt, was sich aber selbstverständlich auch auf alle vorgenannten Paare von Sensorelementen übertragen lässt. Des Weiteren ist beispielhaft der absperrkörperseitigen starre Abschnitt 12 angeführt. Das Messprinzip lässt sich aber selbstverständlich auch auf den antriebsseitigen starren Abschnitt 10 übertragen.

Das Sensorelement 30 umfasst zwei feststehende elektrisch leitfähige Bahnen 70 und 72, welche sich entlang einer Bewegungsbahn 74 des starren Abschnitts 12 erstrecken und welche einen messbaren Widerstand pro Längeneinheit aufweisen. Das Sensorelement 32 ist als Schleifkontakt ausgebildet, welcher die beiden elektrisch leitfähigen Bahnen 70 und 72 elektrisch leitend verbindet. Wird das Sensorelement 32 entlang der Bahnen 70 und 72 bewegt, so ändert sich ein mittels einer Messeinheit 76 messbarer elektrischer Widerstand, welcher als Signal S1 an die nicht dargestellte Steuereinheit übermittelbar ist.

Figur 8 zeigt in schematischer Form ein Beispiel für einen Teil der Sensoreinheit 16. Beispielhaft sind die Sensorelemente 30 und 32 angeführt, was sich aber selbstverständlich auch auf alle vorgenannten Paare von Sensorelementen übertragen lässt. Des Weiteren ist beispielhaft der absperrkörperseitigen starre Abschnitt 12 angeführt. Das Messprinzip lässt sich aber selbstverständlich auch auf den antriebsseitigen starren Abschnitt 10 übertragen.

Das Sensorelement 30 wird durch einen zum Absperrorgan feststehenden entlang der Bewegungsbahn 74 des starren Elements 12 angeordneten Lichtsensor 80 und eine zum Absperrorgan feststehenden Lichtquelle 82 gebildet. Das Sensorelement 32 ist feststehend zu dem starren Abschnitt 12 angeordnet und bewegt sich entlang dessen Bewegungsbahn 74. Das von der Lichtquelle 82 stammende Licht wird über das als Spiegel ausgebildete Sensorelement 32 auf den Lichtsensor 80 umgeleitet. Der Lichtsensor 80 ermittelt das Signal Sl in Abhängigkeit von der Position, auf welche das von dem als Spiegel ausgebildeten Sensorelement 32 umgeleitet Licht auf den Lichtsensor 80 trifft.

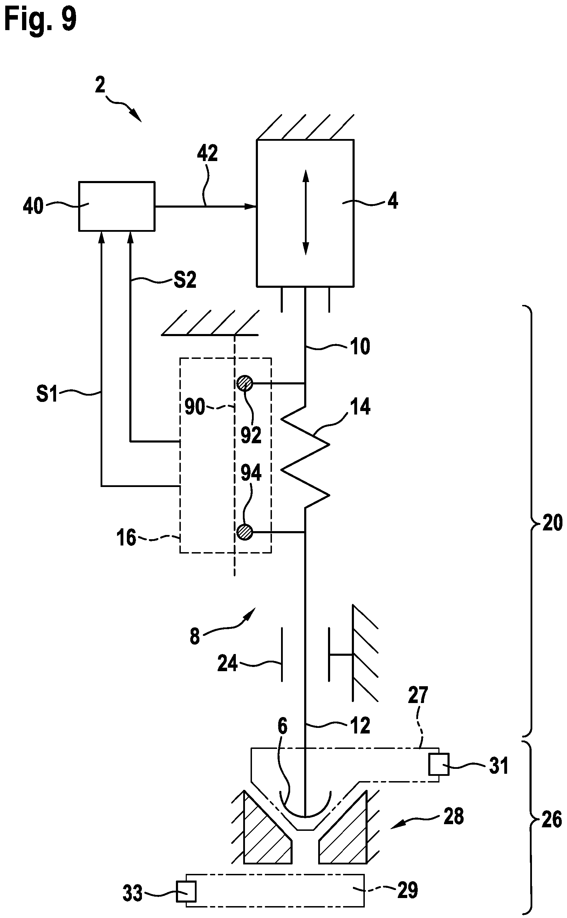

Figur 9 zeigt in schematischer Form ein Beispiel für das Absperrorgan 2. Im Unterschied zu Figur 3 ist eine andere Ausbildung der Sensoreinheit 16 gezeigt. Trotz unterschiedlicher Darstellung entspricht der Ventilkörper 26 der beschriebenen Ausbildung zu Figur 3.

Die Sensoreinheit 16 umfasst ein zum Absperrkörper 2 feststehendes Sensorelement 90. Ein zum antriebsseitigen starren Abschnitt 10 des Antriebselements 8 feststehendes Sensorelement 92 und ein zum absperrkörperseitigen starren Abschnitt 12 feststehendes Sensorelement 94 wirken mit dem gemeinsamen Sensorelement 90 zusammen.

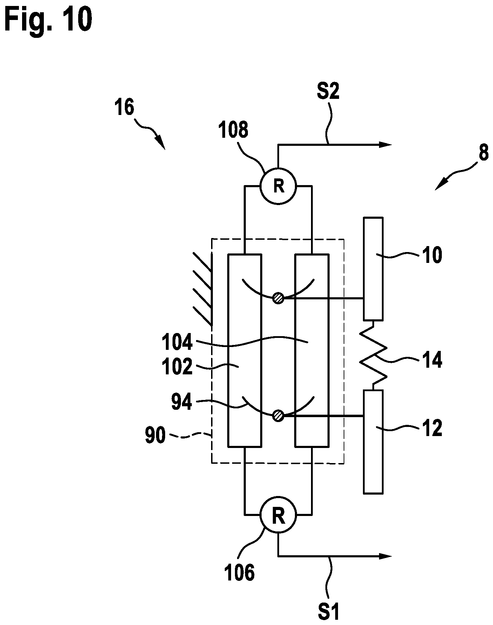

Figur 10 zeigt in schematischer Form ein Beispiel für die Sensoreinheit 16 aus Figur 9. Das Sensorelement 90 umfasst zwei entlang der Bewegungsbahn des Antriebselements 8 angeordnete und zu dem Absperrorgan 2 feststehende elektrisch leitfähige Bahnen 102 und 104. Die Bahnen 102 und 104 sind beispielsweise wie die Bahnen 70 und 72 aus Figur 7 aufgebaut. Das Sensorelement 94 ist ein Schleifkontakt und schließt die beiden Bahnen 102 und 104 kurz. Mittels einer Messeinheit 106 ist das Signal S1 ermittelbar, welches über den gemessenen Widerstand die Position des starren Abschnitts 12 repräsentiert. Das Sensorelement 92 ist ein Schleifkontakt und schließt die beiden Bahnen 102, 104 kurz. Mittels einer Messeinheit 108 ist das Signal S2 ermittelbar, welches über den gemessenen Widerstand die Position des starren Abschnitts 10 repräsentiert.

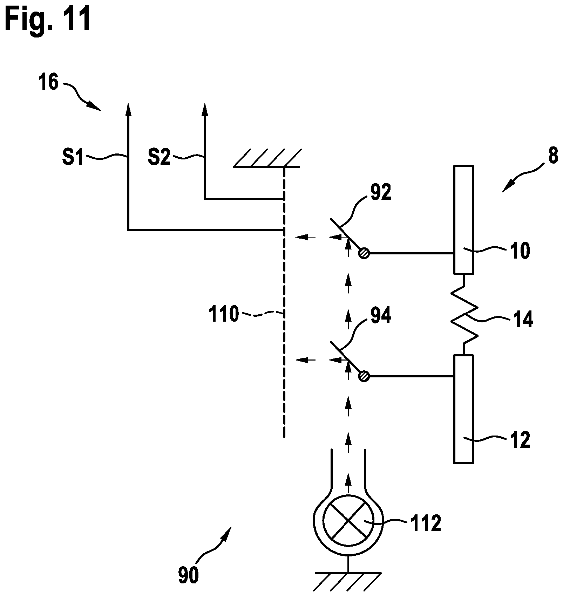

Figur 11 zeigt in schematischer Form ein Beispiel für die Sensoreinheit 16 aus Figur 9. Das Sensorelement 90 wird aus einem Lichtsensor 110 und einer Lichtquelle 112 gebildet, wobei sowohl der Lichtsensor 110 als auch die Lichtquelle 112 feststehend zu dem Absperrorgan angeordnet sind. Das Sensorelement 94 ist als semipermeabler Spiegel ausgebildet und reflektiert einen ersten Teil des von der Lichtquelle 112 ausgehenden und auftreffenden Lichts auf den Lichtsensor 110. Ein weiterer Teil des auftretenden Lichts wird von dem Sensorelement 94 transmittiert und in Richtung des als Spiegel ausgebildeten Sensorelements 92 weitergeleitet. Das auf das Sensorelement 92 treffende Licht wird in Richtung des Lichtsensors 110 reflektiert. Der Lichtsensor 110 empfängt somit zwei Lichtpunkte, welche die Position der beiden starren Abschnitte 10 und 12 repräsentieren und als entsprechende Signale S1 und S2 ausgegeben werden.

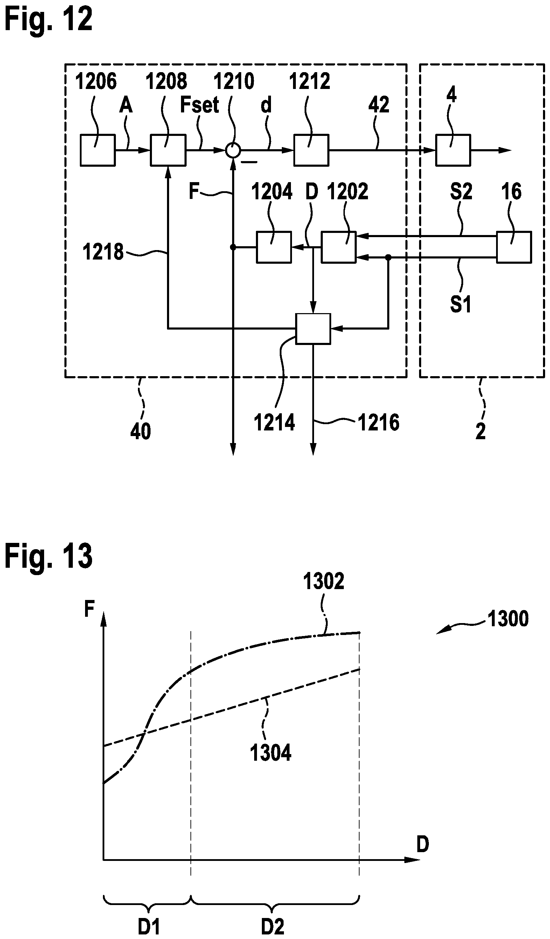

Figur 12 zeigt ein schematisches Blockdiagramm der Steuereinheit 40 zum Betreiben des Absperrorgans 2. Die Sensoreinheit 16 ermittelt die Signale S1 und S2, welche die Positionen der beiden starren Abschnitte wiedergeben, welche den elastischen Zwischenabschnitt umgeben. In Abhängigkeit von den Signalen S1 und S2 ermittelt ein Block 1202 einen Abstand D zwischen den beiden starren Abschnitten des Antriebselements. Ein Block 1204 ermittelt in Abhängigkeit von dem Abstand D unter Zuhilfenahme der Federkonstanten bzw. einer Federkennlinie des elastischen Zwischenabschnitts einen Ist-Wert F der auf den Zwischenabschnitt wirkenden Kraft. Der Ist-Wert F wird von der Steuereinheit 40 ausgegeben.

Ein Block 1206 ermittelt eine von dem Absperrorgan 2 durchzuführende Aktion A, welche beispielsweise umfasst:

Ein Öffnen oder Einregeln des wirksamen Strömungswiderstandes des Absperrorgans für das Prozessfluids. Ein Block 1208 ermittelt in Abhängigkeit von der zugeführten Aktion A einen Soll-Wert Fset. Eine Regeldifferenz d ergibt sich an einer Stelle 1210 in Abhängigkeit von dem Ist-Wert F und dem Soll-Wert Fset für die auf den Zwischenabschnitt wirkende Kraft. Ein Regler 1212 ermittelt in Abhängigkeit von der Regeldifferenz d die Soll-Position 42. Die Steuereinheit 40 betreibt die Antriebseinheit 4 in Abhängigkeit von der ermittelten Soll-Position 42.

Ein Block 1214 ermittelt in Abhängigkeit von dem Signal S1, dass der Absperrkörper sich nicht im Bereich eines Sitzes befindet. In Abhängigkeit von dem Abstand D oder in Abhängigkeit von dem Ist-Wert F ermittelt der Block 1214, dass ein auf den Absperrkörper wirkender Druck einen Schwellwert übersteigt. Wird der auf den Absperrkörper wirkende Druck überschritten und befindet sich der Absperrkörper nicht im Bereich des Ventilsitzes, so kann auf einen Störkörper im Ventilkörper geschlossen werden. Entsprechend wird eine Alarmierung 1216 ausgegeben werden und/oder es wird ein Signal 1218 ermittelt, welches eine Erhöhung des Soll-Werts M für die von der Antriebseinheit 4 eingebrachte Kraft bewirkt, um eine Beseitigung des Störkörpers zu erreichen.

Figur 13 zeigt beispielhaft ein Abstand-Kraft-Diagramm 1300, in dem zwei unterschiedliche Kennlinien 1302 und 1304 für den elastischen Zwischenabschnitt gezeigt sind. Im gezeigten Bereich zeigt die Kennlinie 1304 einen linearen Zusammenhang. Die Kennlinie 1302 hingegen weist in einem Bereich D1 eine größere Steigung auf als im Bereich D2. In dem Bereich D2 ist folglich eine höhere Auflösung bzw. Messgenauigkeit der Kraft erreichbar.

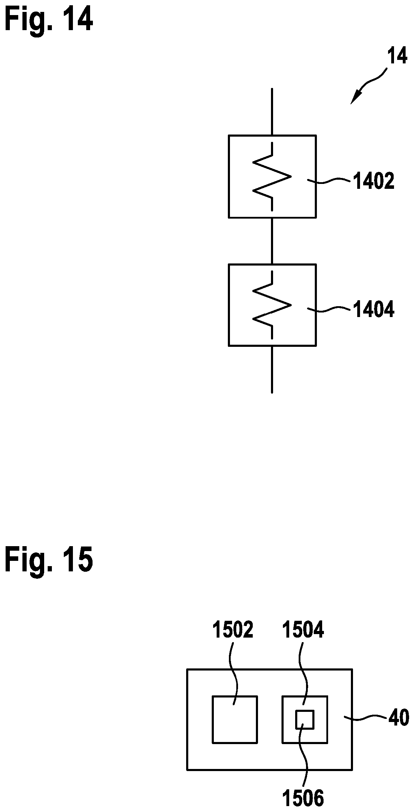

Figur 14 zeigt ein schematisches Beispiel für den Aufbau des elastischen Zwischenabschnitts 14. Der Zwischenabschnitt 14 umfasst zwei in Kraftrichtung hintereinander angeordnete Elemente 1402 und 1404, welche voneinander unterschiedliche Federkonstanten aufweisen. Mittels eines derartigen Aufbaus des elastischen Zwischenabschnitts 14 können in unterschiedlichen Kraftbereichen unterschiedliche Messgenauigkeiten erreicht werden. Beispielhaft wird auf die Kennlinie 1302 aus Figur 13 verwiesen.

Figur 15 zeigt einen schematischen Aufbau der Steuereinheit 40. Diese umfasst wenigstens einen Prozessor 1502 und einen Speicher 1504. Auf dem Speicher 1504 ist ein Computerprogrammcode 1506 abgelegt, welcher so konfiguriert ist, dass er mit dem mindestens einen Prozessor 1502 und dem mindestens einen Speicher 1504 die in dieser Beschreibung offenbarten Verfahrensschritte durchführt.

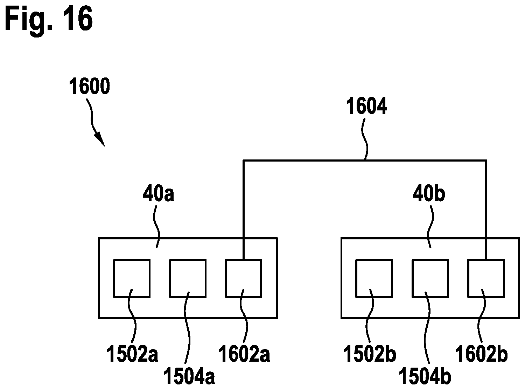

In Figur 16 ist ein Kommunikationsnetzwerk 1600 gezeigt, welches aus zumindest zwei Steuereinheiten 40a und 40b besteht. Die beiden Steuereinheiten 40a und 40b umfassen jeweils den mindestens einen Prozessor 1502a, 1502b und den mindestens einen Speicher 1504a, 1504b. Des Weiteren umfassen die beiden Steuereinheiten 40a und 40b eine jeweilige Netzwerk Schnittstelle 1602a und 1602b und sind über ein Übertragungsmedium 1604 miteinander verbunden. Die Steuereinheiten 40a und 40b übermitteln sich beispielsweise den Ist-Wert F der ermittelten Kraft auf den jeweiligen elastischen Zwischenabschnitt und/oder die Alarmierung 1216 aus Figur 12.

## Patentansprüche

1. Eine Komponente (20) für ein Absperrorgan (2) und zur Begrenzung eines Stroms eines Prozessfluids, wobei die Komponente (20) umfasst:
ein bewegliches Antriebselement (8), welches eine von einer Antriebseinheit (4) ausgehende Antriebskraft wenigstens anteilig in einen Absperrkörper (6) einbringt, wobei ein elastischer Zwischenabschnitt des beweglichen Antriebselements (8) eine Änderung eines Abstands zwischen einem absperrkörperseitigen starren Abschnitt (12) des beweglichen Antriebselements (8) und einem antriebsseitigen starren Abschnitt (10) des beweglichen Antriebselements (8) zulässt; und eine Sensoreinheit (16), welche dazu eingerichtet ist,
wenigstens ein Signal zu ermitteln, welches die Position des absperrkörperseitigen starren Abschnitts (12) des beweglichen Antriebselements (8) und/oder den Abstand zwischen dem absperrkörperseitigen starren Abschnitt (12) des beweglichen Antriebselements (8) und dem antriebsseitigen starren Abschnitt (10) des beweglichen Antriebselements (8) indiziert.

2. Die Komponente (20) gemäß dem Anspruch 1,
wobei ein zum Absperrorgan (2) feststehendes Lagerelement zur Lagerung des Antriebselements (8) eine wenigstens anteilige Einleitung einer von dem absperrkörperseitigen starren Abschnitt (12) ausgehenden Kraft in den Zwischenabschnitt (14) zulässt.

3. Ein Absperrorgan (2) zur Begrenzung eines Stroms eines Prozessfluids, wobei das Absperrorgan (2) umfasst:
die Komponente (20) gemäß Anspruch 1 oder 2;
die Antriebseinheit (4);
den Absperrkörper (6), dessen veränderbare Position einen für das Prozessfluid wirksamen Strömungsdurchmesser des Absperrorgans (2) bestimmt;
das zwischen der Antriebseinheit (4) und dem Absperrkörper (6) angeordnete, bewegliche Antriebselement (8); und
die Sensoreinheit (16).

4. Das Absperrorgan (2) gemäß Anspruch 3, wobei der Zwischenabschnitt (14) wenigstens zwei Unterabschnitte umfasst, welche voneinander unterschiedliche Federkonstanten aufweisen.

5. Das Absperrorgan (2) gemäß einem der Ansprüche 3 bis 4, wobei die Sensoreinheit (16) dazu eingerichtet ist,
ein erstes Signal zu ermitteln, welches eine erste Position des absperrkörperseitigen starren Abschnitts (12) indiziert, und
ein zweites Signal zu ermitteln, welches eine zweite Position des antriebsseitigen starren Abschnitts (10) indiziert.

6. Das Absperrorgan (2) gemäß dem Anspruch 5, wobei die Sensoreinheit (16) umfasst:
wenigstens ein entlang der Bewegungsbahn des absperrkörperseitigen starren Abschnitts (12) und/oder zur Bewegungsbahn des antriebsseitigen starren Abschnitts (10) verlaufendes und zum Absperrorgan (2) feststehendes Sensorelement (30; 34),
wenigstens ein mit dem wenigstens einen zum Absperrorgan (2) feststehenden Sensorelement (30; 34) zusammenwirkendes zum absperrkörperseitigen starren Abschnitt (12) feststehendes Sensorelement (32) für die Ermittlung des ersten Signals, und
wenigstens ein mit dem wenigstens einen zum Absperrorgan (2) feststehenden Sensorelement (30; 34) zusammenwirkendes zum antriebsseitigen starren Abschnitt feststehendes Sensorelement für die Ermittlung des zweiten Signals.

7. Das Absperrorgan (2) gemäß einem der Ansprüche 3 bis 4, wobei die Sensoreinheit dazu eingerichtet ist,
ein erstes Signal zu ermitteln, welches eine erste Position des absperrkörperseitigen starren Abschnitts (12) indiziert, und
ein zweites Signal zu ermitteln, welches den Abstand zwischen dem absperrkörperseitigen starren Abschnitt (12) des Antriebselements (8) und dem antriebsseitigen starren Abschnitt (10) des Antriebselements (8) indiziert.

8. Das Absperrorgan (2) gemäß dem Anspruch 7, wobei die Sensoreinheit umfasst:
wenigstens ein zum Absperrorgan (2) feststehendes und entlang der Bewegungsbahn des absperrkörperseitigen starren Abschnitts (12) verlaufendes Sensorelement (30),
wenigstens ein zum absperrkörperseitigen starren Abschnitt (12) feststehendes und mit dem wenigstens einen zum Absperrkörper (6) feststehenden Sensorabschnitt (30) zusammenwirkendes Sensorelement (32),
wenigstens ein zum antriebsseitigen starren Abschnitt (10) feststehenden und entlang der Bewegungsbahn des absperrkörperseitigen starren Abschnitts (12) und entlang der Bewegungsbahn des antriebsseitigen starren Abschnitts (10) verlaufendes Sensorelement (50), und
wenigstens ein zum absperrkörperseitigen starren Abschnitt (12) feststehendes und mit dem wenigstens ein zum antriebsseitigen Abschnitt (10) feststehenden Sensorelement (50) zusammenwirkendes Sensorelement (52) .

9. Das Absperrorgan (2) gemäß einem der Ansprüche 3 bis 8, wobei ein zum antriebsseitigen starren Abschnitt (10) feststehendes Sensorelement der Sensoreinheit (16) und ein zum absperrkörperseitigen starren Abschnitt (12) feststehendes Sensorelement der Sensoreinheit (16) mit einem zum Absperrorgan (2) feststehenden Sensorelement der Sensoreinheit (16) zusammenwirken.

10. Das Absperrorgan (2) gemäß einem der Ansprüche 3 bis 9, wobei Sensorelemente der Sensoreinheit (16) zur Ermittlung des wenigstens einen Signals das gleiche Messprinzip verwenden.

11. Das Absperrorgan (2) gemäß einem der Ansprüche 3 bis 10 umfassend eine Steuereinheit (40), wobei die Steuereinheit (40) mindestens einen Prozessor und mindestens einen Speicher mit Computerprogrammcode umfasst, wobei der Computerprogrammcode so konfiguriert ist, dass er mit dem mindestens einen Prozessor und dem mindestens einen Speicher bewirkt, dass die Steuereinheit (40)
wenigstens ein Signal, welches den Abstand zwischen dem absperrkörperseitigen starren Abschnitt (12) des beweglichen Antriebselements (8) und dem antriebsseitigen starren Abschnitt (10) des beweglichen Antriebselements (8) indiziert, empfängt;
eine Soll-Position für die Antriebseinheit (4) des Absperrorgans (2) in Abhängigkeit von dem wenigstens einem Signal ermittelt; und
die Antriebseinheit (4) in Abhängigkeit von der ermittelten Soll-Position betreibt.

12. Das Absperrorgan (2) gemäß dem Anspruch 11, wobei die Steuereinheit (40)
einen Ist-Wert einer Kraft, welche auf den zwischen den starren Abschnitten (10, 12) des Antriebselements (8) angeordneten elastischen Zwischenabschnitt (14) des Antriebselements (8) wirkt, in Abhängigkeit dem wenigstens einen Signal und in Abhängigkeit von wenigstens einem Parameter oder einer Kennlinie des elastischen Zwischenabschnitts (14) ermittelt.

13. Das Absperrorgan (2) gemäß dem Anspruch 12, wobei die Steuereinheit (40)
einen Soll-Wert für eine Kraft, welche auf den elastischen Zwischenabschnitt (14) des Antriebselements (8) wirken soll, mit dem Ist-Wert vergleicht, und
die Soll-Position in Abhängigkeit von dem Vergleich ermittelt.

14. Ein Verfahren zum Betreiben eines Absperrorgans umfassend ein Absperrorgan (2) gemäß einem der Ansprüche 3 bis 14,
wobei das Verfahren umfasst:
Empfangen wenigstens eines Signals, welches den Abstand zwischen einem absperrkörperseitigen starren Abschnitt (12) eines beweglichen Antriebselements (8) und einem antriebsseitigen starren Abschnitt (10) des beweglichen Antriebselements (8) indiziert;
Ermitteln einer Soll-Position für eine Antriebseinheit (4) des Absperrorgans (2) in Abhängigkeit von dem wenigstens einem Signal; und
Betreiben der Antriebseinheit (4) in Abhängigkeit von der ermittelten Soll-Position.

## Claims

1. A component (20) for a shut-off device (2) and for limiting a flow of a process fluid, wherein the component (20) comprises:
a movable drive element (8) which introduces a driving force from a drive unit (4) at least partially into a shut-off body (6), wherein an elastic intermediate portion of the movable drive element (8) allows a change in a distance between a shut-off body-side rigid portion (12) of the movable drive element (8) and a drive-side rigid portion (10) of the movable drive element (8); and a sensor unit (16) which is designed to determine at least one signal which indicates the position of the shut-off body-side rigid portion (12) of the movable drive element (8) and/or the distance between the shut-off body-side rigid portion (12) of the movable drive element (8) and the drive-side rigid portion (10) of the movable drive element (8).

2. The component (20) according to claim 1, wherein a bearing element, attached to the shut-off device (2), for supporting the drive element (8) allows at least a partial introduction of a force from the shut-off body-side rigid portion (12) into the intermediate portion (14) .

3. A shut-off device (2) for limiting a flow of a process fluid, wherein the shut-off device (2) comprises:
the component (20) according to claim 1 or claim 2;
the drive unit (4);
the shut-off body (6), the variable position of which determines a flow diameter of the shut-off device (2) effective for the process fluid;
the movable drive element (8) arranged between the drive unit (4) and the shut-off body (6); and
the sensor unit (16).

4. The shut-off device (2) according to claim 3, wherein the intermediate portion (14) comprises at least two sub-portions which have different spring constants from one another.

5. The shut-off device (2) according to any one of claims 3 to 4, wherein the sensor unit (16) is designed to
determine a first signal which indicates a first position of the shut-off body-side rigid portion (12), and
determine a second signal which indicates a second position of the drive-side rigid portion (10).

6. The shut-off device (2) according to claim 5, wherein the sensor unit (16) comprises:
at least one sensor element (30; 34) which extends along the movement path of the shut-off body-side rigid portion (12) and/or to the movement path of the drive-side rigid portion (10) and is attached to the shut-off device (2),
at least one sensor element (32), which cooperates with the at least one sensor element (30; 34) attached to the shut-off device (2) and is attached to the shut-off body-side rigid portion (12), for determining the first signal, and
at least one sensor element, which cooperates with the at least one sensor element (30; 34) attached to the shut-off device (2) and is attached to the drive-side rigid portion, for determining the second signal.

7. The shut-off device (2) according to any one of claims 3 to 4, wherein the sensor unit is designed to
determine a first signal which indicates a first position of the shut-off body-side rigid portion (12), and
determine a second signal which indicates the distance between the shut-off body-side rigid portion (12) of the drive element (8) and the drive-side rigid portion (10) of the drive element (8).

8. The shut-off device (2) according to claim 7, wherein the sensor unit comprises:
at least one sensor element (30) which is attached to the shut-off device (2) and extends along the movement path of the shut-off body-side rigid portion (12),
at least one sensor element (32) which is attached to the shut-off body-side rigid portion (12) and cooperates with the at least one sensor portion (30) attached to the shut-off body (6),
at least one sensor element (50) which is attached to the drive-side rigid portion (10) and extends along the movement path of the shut-off body-side rigid portion (12) and along the movement path of the drive-side rigid portion (10), and
at least one sensor element (52) which is attached to the shut-off body-side rigid portion (12) and cooperates with the at least one sensor element (50) attached to the drive-side rigid portion (10).

9. The shut-off device (2) according to any one of claims 3 to 8, wherein a sensor element of the sensor unit (16) attached to the drive-side rigid portion (10) and a sensor element of the sensor unit (16) attached to the shut-off body-side rigid portion (12) cooperate with a sensor element of the sensor unit (16) attached to the shut-off device (2).

10. The shut-off device (2) according to any one of claims 3 to 9, wherein sensor elements of the sensor unit (16) use the same measuring principle to determine the at least one signal.

11. The shut-off device (2) according to any one of claims 3 to 10 comprising a control unit (40), wherein the control unit (40) comprises at least one processor and at least one memory having computer program code, wherein the computer program code is configured such that it causes, using the at least one processor and the at least one memory, the control unit (40) to
receive at least one signal which indicates the distance between the shut-off body-side rigid portion (12) of the movable drive element (8) and the drive-side rigid portion (10) of the movable drive element (8) ;
determine a target position for the drive unit (4) of the shut-off device (2) on the basis of the at least one signal; and
operate the drive unit (4) on the basis of the determined target position.

12. The shut-off device (2) according to claim 11, wherein the control unit (40)
determines an actual value of a force acting on the elastic intermediate portion (14) of the drive element (8) arranged between the rigid portions (10, 12) of the drive element (8) on the basis of the at least one signal and on the basis of at least one parameter or a characteristic curve of the elastic intermediate portion (14).

13. The shut-off device (2) according to claim 12, wherein the control unit (40)
compares a target value for a force which is intended to act on the elastic intermediate portion (14) of the drive element (8) with the actual value, and
determines the target position on the basis of the comparison.

14. A method for operating a shut-off device comprising a shut-off device (2) according to any one of claims 3 to 14, wherein the method comprises:
receiving at least one signal which indicates the distance between a shut-off body-side rigid portion (12) of a movable drive element (8) and a drive-side rigid portion (10) of the movable drive element (8);
determining a target position for a drive unit (4) of the shut-off device (2) on the basis of the at least one signal; and
operating the drive unit (4) on the basis of the determined target position.

## Revendications

1. Composant (20) pour un organe d'arrêt (2) et permettant de limiter un écoulement d'un fluide de processus, dans lequel le composant (20) comprend:
un élément d'entraînement (8) mobile qui introduit au moins partiellement une force d'entraînement provenant d'une unité d'entraînement (4) dans un corps d'arrêt (6), dans lequel une section intermédiaire élastique de l'élément d'entraînement (8) mobile permet une modification d'une distance entre une section rigide (12) de l'élément d'entraînement (8) mobile située côté corps d'arrêt et une section rigide (10) de l'élément d'entraînement (8) mobile située côté entraînement; et
une unité formant capteur (16) qui est configurée pour déterminer au moins un signal qui indique la position de la section rigide (12) de l'élément d'entraînement (8) mobile située côté corps d'arrêt et/ou la distance entre la section rigide (12) de l'élément d'entraînement (8) mobile située côté corps d'arrêt et
la section rigide (10) de l'élément d'entraînement (8) mobile située côté entraînement.

2. Composant (20) selon la revendication 1, dans lequel un élément de support fixe par rapport à l'organe d'arrêt (2) et permettant de supporter l'élément d'entraînement (8) permet une introduction au moins partielle dans la section intermédiaire (14) d'une force provenant de la section rigide (12) située côté corps d'arrêt.

3. Organe d'arrêt (2) permettant de limiter un écoulement d'un fluide de processus, dans lequel l'organe d'arrêt (2) comprend:
le composant (20) selon la revendication 1 ou 2;
l'unité d'entraînement (4);
le corps d'arrêt (6), dont la position modifiable définit un diamètre d'écoulement de l'organe d'arrêt (2), lequel diamètre d'écoulement est efficace pour le fluide de processus;
l'élément d'entraînement (8) mobile disposé entre l'unité d'entraînement (4) et le corps d'arrêt (6); et
l'unité formant capteur (16).

4. Organe d'arrêt (2) selon la revendication 3, dans lequel la section intermédiaire (14) comprend au moins deux sous-sections qui présentent des constantes de raideur différentes l'une de l'autre.

5. Organe d'arrêt (2) selon l'une des revendications 3 à 4, dans lequel l'unité formant capteur (16) est configurée pour
déterminer un premier signal qui indique une première position de la section rigide (12) située côté corps d'arrêt, et
déterminer un second signal qui indique une seconde position de la section rigide (10) située côté entraînement.

6. Organe d'arrêt (2) selon la revendication 5, dans lequel l'unité formant capteur (16) comprend:
au moins un élément de capteur (30; 34) qui s'étend le long de la trajectoire de déplacement de la section rigide (12) située côté corps d'arrêt et/ou par rapport à la trajectoire de déplacement de la section rigide (10) située côté entraînement et est fixe par rapport à l'organe d'arrêt (2),
au moins un élément de capteur (32) qui coopère avec l'au moins un élément de capteur (30; 34) fixe par rapport à l'organe d'arrêt (2) et qui est fixe par rapport à la section rigide (12) située côté corps d'arrêt pour la détermination du premier signal, et
au moins un élément de capteur qui coopère avec l'au moins un élément de capteur (30; 34) fixe par rapport à l'organe d'arrêt (2) et qui est fixe par rapport à la section rigide située côté entraînement pour la détermination du second signal.

7. Organe d'arrêt (2) selon l'une des revendications 3 à 4, dans lequel l'unité formant capteur est configurée pour
déterminer un premier signal qui indique une première position de la section rigide (12) située côté corps d'arrêt, et
déterminer un second signal qui indique la distance entre la section rigide (12) de l'élément d'entraînement (8) située côté corps d'arrêt et la section rigide (10) de l'élément d'entraînement (8) située côté entraînement.

8. Organe d'arrêt (2) selon la revendication 7, dans lequel l'unité formant capteur comprend:
au moins un élément de capteur (30) qui est fixe par rapport à l'organe d'arrêt (2) et qui s'étend le long de la trajectoire de déplacement de la section rigide (12) située côté organe d'arrêt,
au moins un élément de capteur (32) qui est fixe par rapport à la section rigide (12) située côté corps d'arrêt et qui coopère avec l'au moins une section de capteur (30) fixe par rapport au corps d'arrêt (6),
au moins un élément de capteur (50) qui est fixe par rapport à la section rigide (10) située côté entraînement et qui s'étend le long de la trajectoire de déplacement de la section rigide (12) située côté corps d'arrêt et le long de la trajectoire de déplacement de la section rigide (10) située côté entraînement, et
au moins un élément de capteur (52) qui est fixe par rapport à la section rigide (12) située côté corps d'arrêt et qui coopère avec l'au moins un élément de capteur (50) fixe par rapport à la section (10) située côté entraînement.

9. Organe d'arrêt (2) selon l'une des revendications 3 à 8, dans lequel un élément de capteur de l'unité formant capteur (16) fixe par rapport à la section rigide (10) située côté entraînement et un élément de capteur de l'unité formant capteur (16) fixe par rapport à la section rigide (12) située côté corps d'arrêt coopèrent avec un élément de capteur de l'unité formant capteur (16) fixe par rapport à l'organe d'arrêt (2).

10. Organe d'arrêt (2) selon l'une des revendications 3 à 9, dans lequel des éléments de capteur de l'unité formant capteur (16) utilisent le même principe de mesure pour déterminer l'au moins un signal.

11. Organe d'arrêt (2) selon l'une des revendications 3 à 10 comprenant une unité de commande (40), dans lequel l'unité de commande (40) comprend au moins un processeur et au moins une mémoire comportant un code de programme informatique, dans lequel le code de programme informatique est configuré de sorte qu'il agit avec l'au moins un processeur et l'au moins une mémoire, de sorte que l'unité de commande (40) reçoit au moins un signal qui indique la distance entre la section rigide (12) de l'élément d'entraînement (8) mobile située côté corps d'arrêt et la section rigide (10) de l'élément d'entraînement (8) mobile située côté entraînement;
détermine une position de consigne pour l'unité d'entraînement (4) de l'organe d'arrêt (2) en fonction de l'au moins un signal; et
fait fonctionner l'unité d'entraînement (4) en fonction de la position de consigne déterminée.

12. Organe d'arrêt (2) selon la revendication 11, dans lequel l'unité de commande (40)
détermine une valeur réelle d'une force qui agit sur la section intermédiaire (14) élastique de l'élément d'entraînement (8) disposée entre les sections rigides (10, 12) de l'élément d'entraînement (8) en fonction de l'au moins un signal et en fonction d'au moins un paramètre ou d'une caractéristique de la section intermédiaire (14) élastique.

13. Organe d'arrêt (2) selon la revendication 12, dans lequel l'unité de commande (40)
compare une valeur de consigne pour une force, laquelle force doit agir sur la section intermédiaire (14) élastique de l'élément d'entraînement (8), avec la valeur réelle, et
détermine la position de consigne en fonction de la comparaison.

14. Procédé permettant de faire fonctionner un organe d'arrêt comprenant un organe d'arrêt (2) selon l'une des revendications 3 à 14, dans lequel le procédé comprend:
la réception d'au moins un signal qui indique la distance entre une section rigide (12) d'un élément d'entraînement (8) mobile située côté corps d'arrêt et une section rigide (10) de l'élément d'entraînement (8) mobile située côté entraînement;
la détermination d'une position de consigne pour une unité d'entraînement (4) de l'organe d'arrêt (2) en fonction de l'au moins un signal; et
le fait de faire fonctionner l'unité d'entraînement (4) en fonction de la position de consigne déterminée.
